# EUROPEAN PATENT SPECIFICATION

(11) **EP 1 638 006 B1**
(45) Date of publication and mention of the grant of the patent: **18.03.2009**
(21) Application number: 05105655.4
(22) Date of filing: 24.06.2005
(51) Int. Cl.: G06F 13/38, G06K 7/00, H04N 7/16

(54) **System for controlling smart card slots and method for controlling smart card slots**
System zur Bedienung von Chipkartenlesegeräten und Verfahren zur Bedienung von Chipkartenlesegeräten
Systeme de service des lecteurs des cartes électroniques et procédé de service des lecteurs des cartes électroniques

(30) Priority: 20.09.2004 PL 37018504
(43) Date of publication of application: 22.03.2006
(73) Proprietor: Advanced Digital Broadcast Polska Spolka z o.o., 65-119 Zielona Gora (PL); Advanced Digital Broadcast Ltd., Hsin-Tien City Taipei County 231 (TW)
(72) Inventor: Czerwinski, Arkadiusz Advanced Digital Broadcast, 67-100, Nowa Sol (PL); Michalczak, Maciej Advanced Digital Broadcast, 65-245, Zielona Gora (PL)
(74) Representative: Hudy, Ludwik

(56) References cited:
- EP-A- 0 562 295
- EP-A- 0 964 573
- EP-A- 0 982 692
- WO-A-01/80473
- US-A- 5 742 680
- US-A- 6 035 037
- US-A1- 2002 051 469
- ZA-A- 200 204 489

## Description

The present invention relates to a system for controlling smart card slots and a method for controlling smart card slots.

Smart cards, defined by ISO/IEC 7816 standard "*Identification cards - Integrated circuit(s) cards with contacts*", are widely used for data transfer. Data may be read from those cards by various devices via card slots.

Smart cards are widely used with digital television decoders for signal descrambling or additional services, such as banking, telephony, or voting. These functions are controlled by specific systems embedded in the decoder, such as conditional access systems or high-level card drivers used by applications providing additional services. Such embedded systems are usually provided as modules by various companies, and the interfaces of those modules are provider-specific. Therefore, in order to handle a specific embedded system, the software of the decoder needs to be adapted to the interface of that system. This may cause problems, since such adaptation requires a considerable workload and resources.

From the European Patent No. EP 0562295 entitled "*Method and apparatus for controlling several smart cards*" there is known a method for controlling several smart card readers, where after a card in one reader is selected, the power supply to the other readers is switched off. Each slot is assigned to a card of a specific type. The switching -off of the power supply and the requirement of a separate slot for each card type are serious drawbacks of this design.

From the US Patent No. US 5,742,680 entitled "*Set top box for receiving and decryption and descrambling a plurality of satellite television signals*" there is known a digital television decoder, with several card slots, which selects the card necessary to decrypt the received signal. However, neither the method of selection nor the data flow has been described in detail. The drawback of such a solution is that only one card at a time can be used.

From the US Patent No. US 6,035,037 entitled "*System for processing a video signal via series-connected high speed signal processing smart cards"* there is known a system for receiving a television signal scrambled by two methods, where the signal is descrambled by two smart cards connected in series. Therefore, such a solution does not allow simultaneous descrambling of various signals by various methods.

From the PCT Publication No. WO 0180473A2 entitled "*Method for standardizing the use of ISO 7816 smart cards in conditional access systems*" there is known a method for using cards of various types in one device by providing a uniform application program interface (API). However, the method does not permit the simultaneous use of several cards.

From the patent publication No. ZA200204489A entitled "Decoder with multiple conditional access facility" there is known a system for controlling two smart card slots of a set-top box with two embedded systems (descramblers) communicating via clients. Each descrambler is permanently connected to and communicates only with a dedicated smart card. Therefore, such system is not capable of controlling the status of cards in each slot in relation to a plurality of clients, but only in relation to a single, dedicated client.

In turn, the publication of European patent application No. EP 0 982 692 A2 entitled "*Expanded smart card communication architecture and procedure for communicating between smart card application and data carrier*" teaches a communication architecture for smart card systems using protected data carriers which has a common virtual smart card interface between the respective smart card applications and the modules which facilitate access to the protected carriers (smart cards). According to this publication the modules allow access to either physical smart cards, virtual software smart cards or hardware smart cards. The main drawback of this solution is that the described architecture provides only a one-to-many mechanism for communication between smart card applications and smart card modules.

The aim of the present invention is to create a simple system for controlling several types of smart cards in a device with several embedded systems requesting access to smart card resources to avoid or at least greatly diminish the drawbacks of the prior art systems.

A system for controlling smart card slots of a device with embedded systems requesting access to smart card resources via a low-level slot interface comprises a slot manager, which manages access to slot interfaces for embedded systems requesting access to smart card resources via system-specific program interfaces, and which provides, at least, functions of access to card resources, where each embedded system is provided with a client which handles communication between the embedded system and the slot manager via a client program interface, and where the slot manager comprises a status controller configured to control the status of cards in each slot of the smart card slots in relation to a plurality of clients, and the slot manager is configured to control access of embedded systems requesting access to resources of a smart card in a specific slot on the basis of the current status of the card in a particular slot for the client of a particular embedded system.

The client can be a block, which converts events of the system-specific program interface to events of the client program interface and vice versa.

The slot manager can be a block which handles communication with smart card slots, which, via the slot registration block and the client registration block, collects information on available slots via, and stores it in the slot-table, and collects information on the clients of the embedded systems requesting access to smart card resources and stores that information in the client-table, and determines the access of clients to slot interfaces via the access controller.

The status of the card in the slot for a specific client can be stored by the slot manager in the client-table, which contains information about clients registered for specific slots.

In the slot-table there can be stored a priority of a specific client for a specific slot, specifying the priority of access to the slot by the client with respect to other clients registered for the slot, as well as hardware configurations required by specific clients for specific slots.

The status of a card for a client can be at least "INSERTED", where after a client's request for access to card resources the access is granted, and "NO_ACCESS", where after a client's request for access to card resources the access is denied.

Preferably, the status controller comprises a card initialization controller handling the transition between the "INSERTED" and "NO_ACCESS" statuses, where for consecutive clients the status of the card is set to "INSERTED" and to "NO_ACCESS" for other clients, and if the client does not accept the card, the procedure is passed to the next client, and if the client accepts the card, the procedure is terminated.

The status of a card for a client can be "OVERLOAD", where after a client's request for access to card resources information about a card error is sent, and the status of "REMOVED", where after a client's request for access to card resources information about no available card is sent.

Preferably, the embedded systems requesting access to smart card resources are conditional access systems and/or high-level smart card drivers.

Preferably, the clients are software modules provided for embedded systems requesting access to smart card resources and which handle communication with the embedded systems via a program interface uniform for all clients.

The object of the invention is also a method for controlling smart card slots of a device with embedded systems requesting access to smart card resources via a low-level slot interface, where a slot manager module is provided, which manages access to slot interfaces for embedded systems requesting access to smart card resources via system-specific program interfaces, and which provides at least the functions of access to card resources and a client is created and provided for each embedded system, the client handling communication between the embedded system and the slot manager via a client program interface and the slot manager is provided with a status controller, controlling the status of cards in slots, and the access of embedded systems requesting access to resources of a smart card in a specific slot is made dependent on the current status of the card in that slot for the client of that embedded system.

The communication with smart card slots can be handled via the slot manager, such that information on available slots is collected via the slot registration block and stored in the slot table, and information on the clients of the embedded systems requesting access to smart card resources is collected via the client registration block and stored in the client table, and the access of clients to slot interfaces is determined via the access controller.

In the accompanying drawings one of the possible embodiments of the present invention is shown, where:
Fig. 1 presents a structure of a digital television decoder with a system for controlling smart card slots;
Fig. 2A presents a method for communicating between systems requesting access to smart card resources and other blocks via clients;
Fig. 2B presents a schematic layout of client operation;
Fig. 3 presents a structure of a slot manager;
Fig. 4A presents conditions for transition between individual slot statuses;
Fig. 4B presents conditions for transition between individual card statuses;
Fig. 5 presents a flow diagram of a procedure for slot registration;
Fig. 6 presents a flow diagram of a procedure for client registration;
Fig. 7 presents a flow diagram of a procedure for card initialization; and
Fig. 8 presents a flow diagram of a procedure for access control.

The system for controlling smart card slots according to the invention is shown in an exemplary embodiment related to a digital television decoder. Alternatively, it can be used with other devices able to handle smart cards of various types.

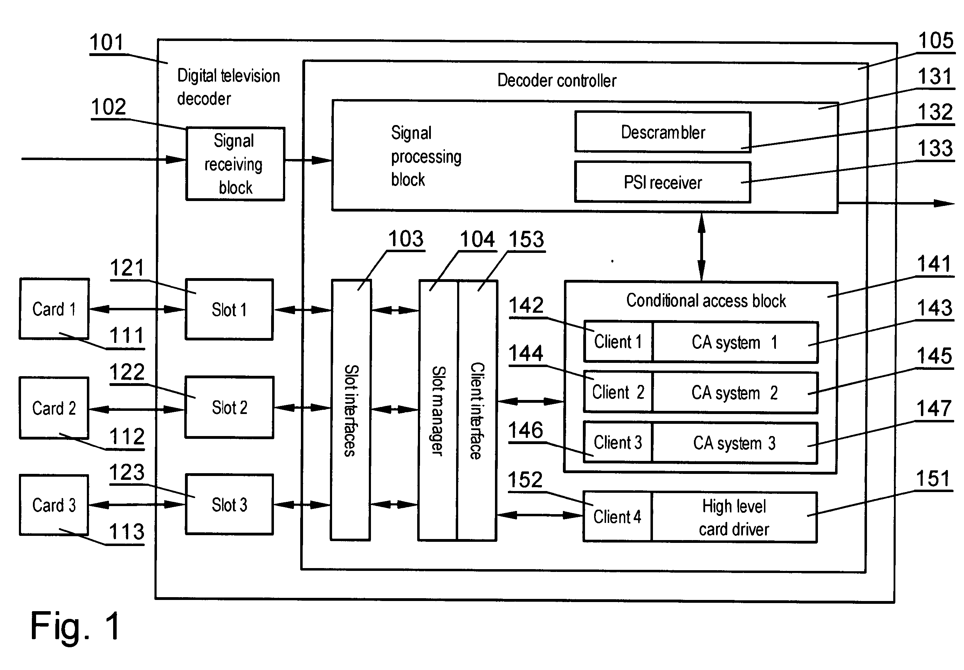

Fig. 1 presents a general structure of a digital television decoder 101 with a system for controlling smart card slots. The main element of the decoder 101 is a decoder controller 105, comprising a signal processing block and other blocks for handling various software. The decoder receives, via a signal receiving block 102 (comprising, for example, a tuner and a demodulator), a digital television signal (for example, satellite, cable or terrestrial). This can be a multi-channel block for receiving signals from several sources. The signal receiving block 102 transmits digital data streams to the signal processing block 131, which converts the signal to a format acceptable by a user terminal. For example, it decodes the MPEG format and converts the data to PAL/NTSC format. The signal received by the signal processing block 131 can be scrambled. The signal processing block comprises a descrambler 132 and a PSI (Program Specific Information) receiver 133. The descrambler 132 descrambles the received signal, and its operation is controlled by the conditional access block 141. The PSI receiver 133 monitors PSI data and transmits PSI data related to access control to the conditional access block.

The conditional access block of the decoder comprises several embedded systems requesting access to smart card resources, for example CA (Conditional Access) systems 143, 145, 147, for handling various scrambling algorithms. The conditional access systems communicate with smart cards and, based on the information read from the smart card, configure the descrambler. The decoder controller may comprise other embedded systems requesting access to smart card resources, for example a high-level smart card driver 151. The high level-smart card driver 151 handles specific transmission protocols, for example T=0 and T=1 protocols according to ISO/IEC 7816-3 norm "*Identification cards - Integrated circuit(s) cards with contacts - Part 3: Electronic signals and transmission protocols*". The driver can be used by applications compliant with the OCF (Open Card Framework) standard for additional services.

The invention also includes modules for the embedded systems requesting access to smart card resources, which are here referred to as "clients" 142, 144, 146, 152. The clients enable communication with the embedded systems via an application program interface uniform for all clients, referred to as the client interface.

The decoder is provided with slots 121, 122, 123 for reading smart cards 111, 112, 113. The access to resources of a card inserted to a specific slot is enabled via slot interfaces 103, which are low-level software modules. The slot interface is designed by the decoder provider and is usually different from the interfaces of the embedded systems requesting access to smart card resources.

According to the invention, the slot manager 104 enables the communication of the embedded systems requesting access to smart card resources (such as conditional access systems or high-level smart card drivers) with the slot interface 103, which provides smart card resources. The communication with the embedded systems is handled via clients, providing an interface for communication with those systems, which is uniform for all clients, referred to as the client interface 153. The slot manager 104 of the present invention is a block, which controls communication with smart card slots. It can be either a separate hardware element of the decoder or a software module of the decoder controller. It controls the communication between the slot interfaces embedded in the decoder controller and systems requesting access to smart card resources, which are also embedded in the decoder controller. The systems may be, for example, high-level smart card drivers (software used by high-level applications for additional services) or conditional access systems (controlling specific devices, for example the slots or the descrambler, which can also be implemented as software). The communication between the slot interface and clients of embedded systems requesting access to smart card resources depends on the information on slots and clients, which is collected by a slot manager via a slot registration block and a client registration block. Information on slots includes a slot identifier, a slot callback function (through which the slot interface can be communicated) and a current status of a card for a slot. Information on clients of embedded systems requesting access to smart card resources include: a client identifier, an identifier of a slot for which the client has been registered, a priority, a client callback function (which the system can be communicated with), a status of the card for the client and a hardware configuration of the slot as required by the client. The slot manager may communicate with embedded systems requesting access to smart card resources of various providers, via clients handling the client interface. Similarly, various slots may communicate with the slot manager via the slot interfaces. In the presented embodiment, as embedded systems requesting access to smart card resources, three conditional access systems have been presented and one high-level smart card driver, and three smart card slots. However, the presented system can be used for handling an arbitrary number of cards and slots.

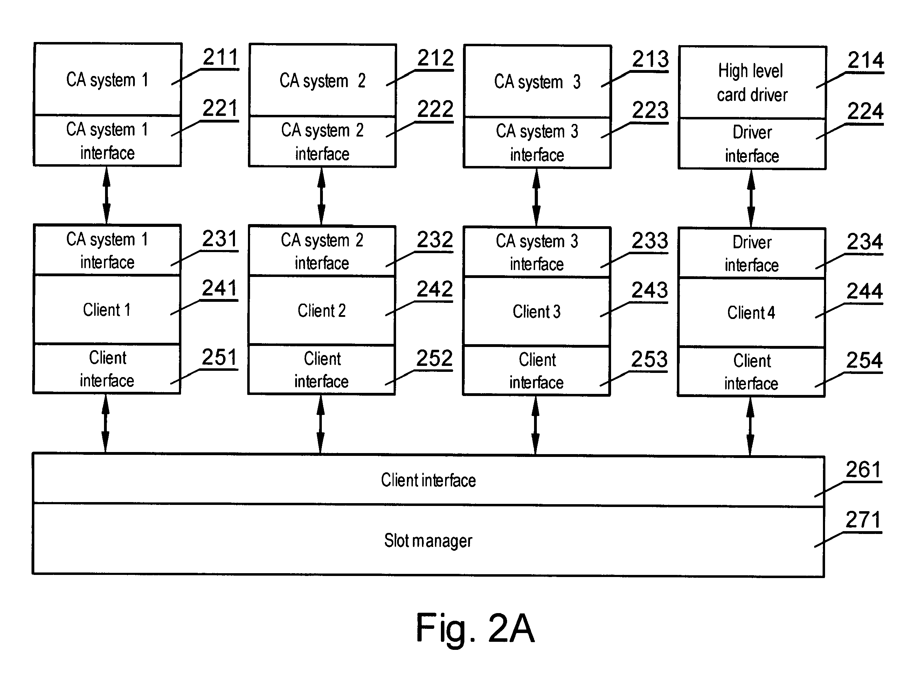

Fig. 2A presents a method for communicating between systems requesting access to smart card resources and other blocks via clients. The systems 211, 212, 213, 214 requesting access to smart card resources, communicate via individual system-specific interfaces 221, 222, 223, 224. Each system is handled by a separate client 241, 242, 243, 244. Each client communicates with its system via a system-specific interface, 231, 232, 233, 234 respectively. The main function of the client is to convert events between a system-specific interface and the client interface, uniform for several clients. This allows the other blocks of the system (for example, the slot manager 271) to communicate with the systems via clients using a uniform client interface 261. Preferably, all systems requesting access to smart card resources are handled by clients allowing communication by a uniform client interface. The presented solution is advantageous for a system having at least two clients providing a uniform client interface.

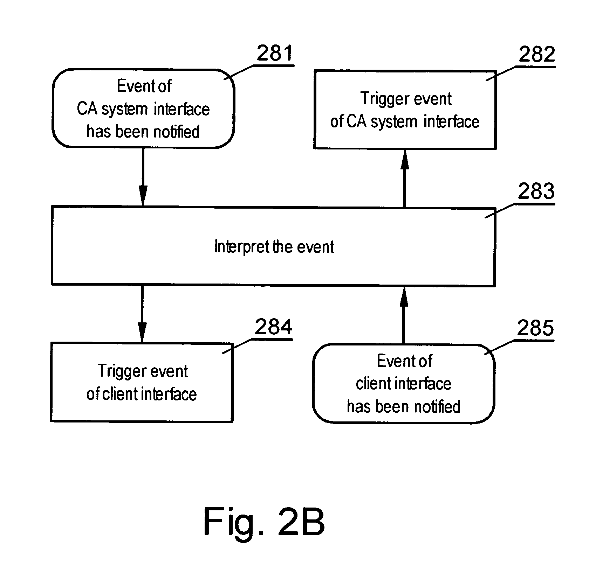

Fig. 2B presents a schematic of client operation. When, at the interface of the system requiring access to smart card resources (i.e. the interface of the CA system or driver interface) handled by the client, an event is notified by the system 281, the client interprets this event 283 and then triggers a relevant event of the client interface. Similarly, when at the client interface there appears an event 285 notified by another block (for example, by the slot manager), the client interprets this event 283 and then triggers a relevant event 282 of the interface of the system it handles. An example of the event is a function for reading or writing specific data.

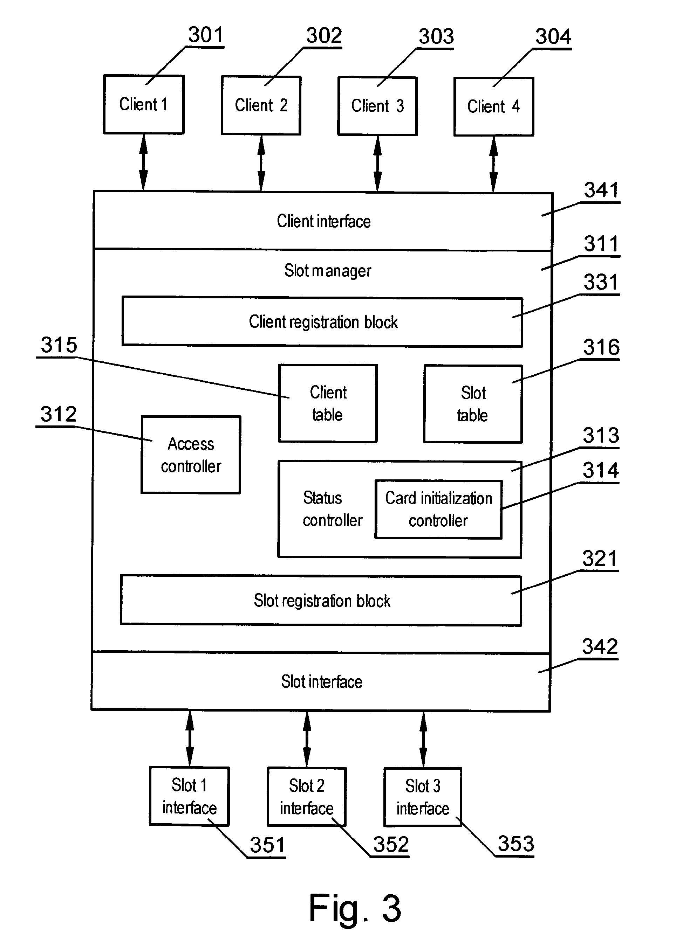

Fig. 3 presents the structure of the software layer of the system for controlling smart card slots according to the invention, comprising a slot manager 311, four cooperating clients 301, 302, 303, 304 and three slot interfaces 351, 352, 353. The slot manager 311 communicates with the clients via the client interface 341, and with the slot interfaces via the slot interface 342. In such an embodiment, clients and slot interfaces of various types may co-operate with the slot manager, and the only requirement they must meet is their support for a specific program interface.

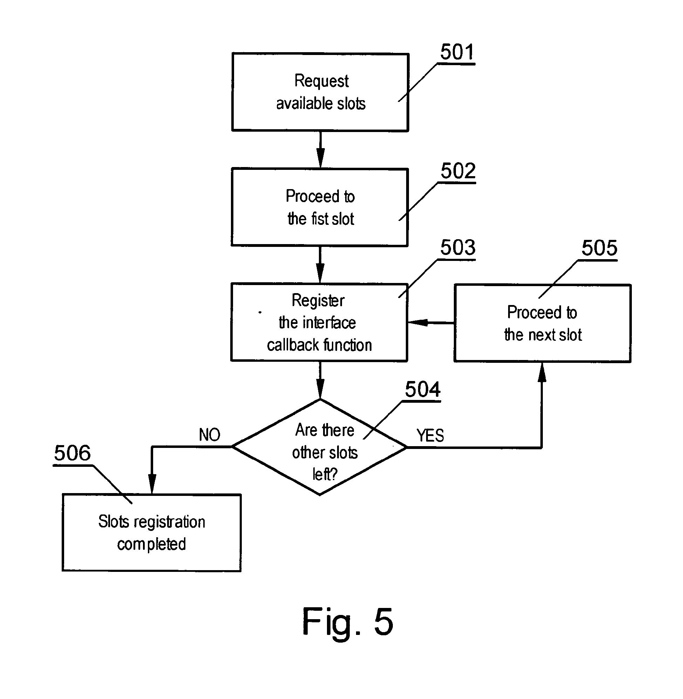

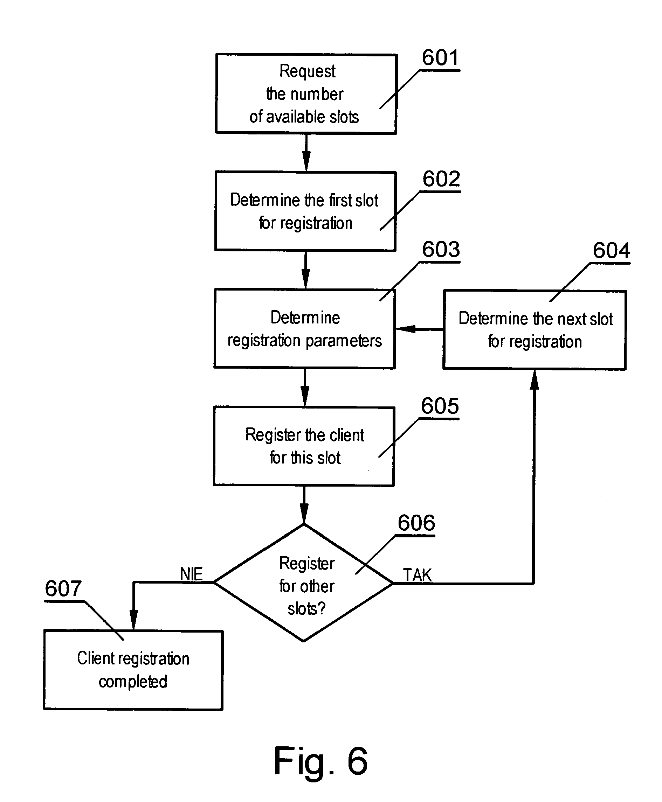

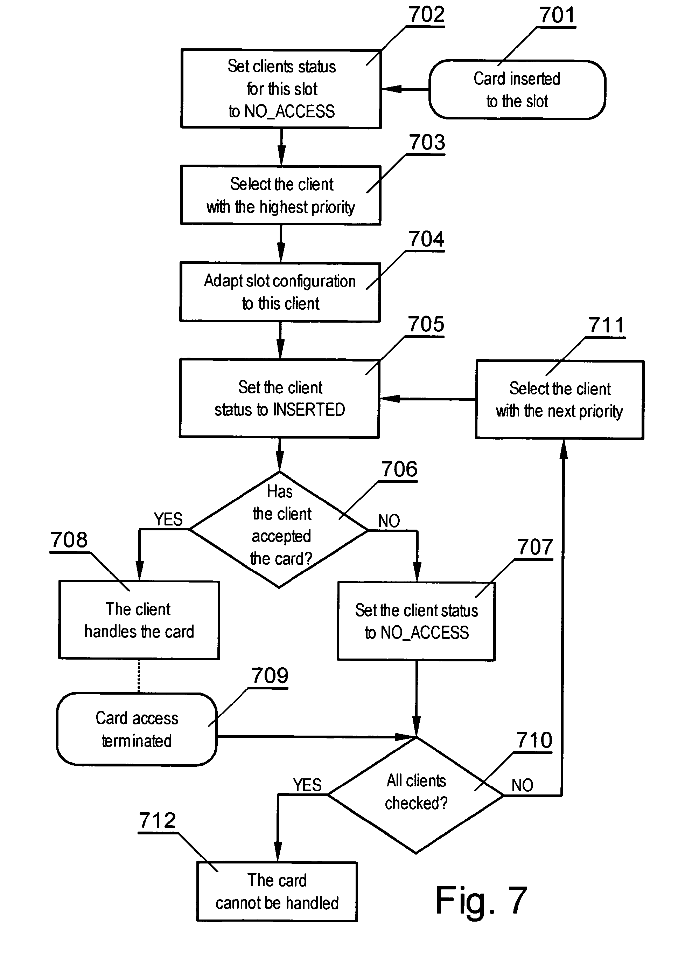

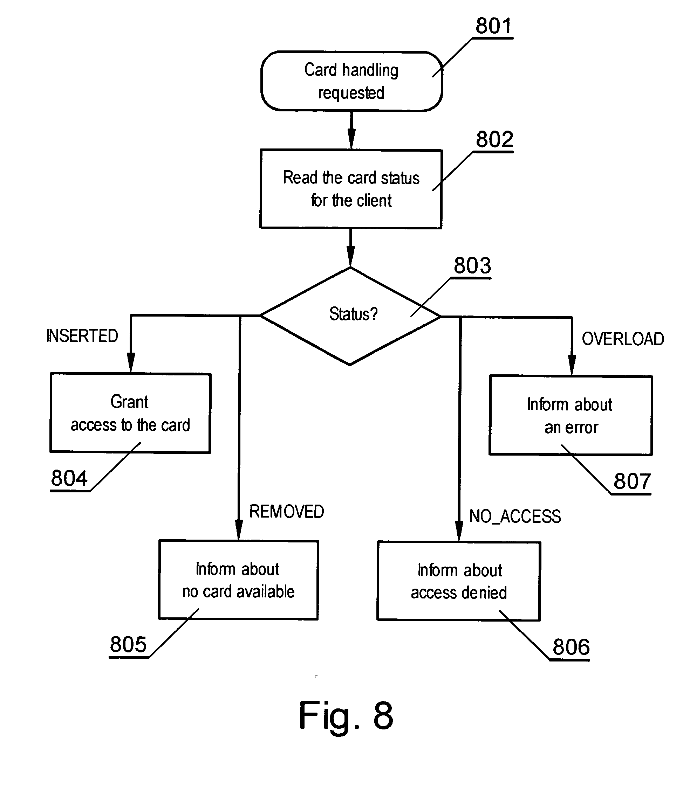

The client interface 341 enables the client to access card resources via basic functions, such as a function for reading or writing data. The access of a specific client to resources of a card depends on the current status of the card in relation to that client. The slot manager 311 additionally incorporates a slot registration block 321, responsible for initialization of slots at the start-up of the decoder, according to a procedure shown in Fig. 5. In addition, the slot manager 311 may incorporate a client registration block 331, which provides a function for registering clients (which stores registration parameters in the client table) and a function providing information about slots (which provides information on slots for clients). A typical registration process performed by the client is shown in Fig. 6. In addition, the slot manager 311 incorporates an access controller 312, which grants, or denies, access by clients to resources of specific cards. The operation of the access controller 312 is presented in Fig. 8. The statuses of cards for specific clients and slots are stored in specific data structures, which, in the presented embodiment, are tables 315 and 316, in which other data characterizing clients and slots can also be stored (described below). Instead of tables, other data structures can be used. The statuses are handled by a status controller 313. Its crucial element is a card initialization controller 314, which, via a procedure shown in Fig. 7, handles the transitions between NO_ACCESS and INSERTED statuses.

The statuses of cards in slots stored in the slot table can have the following values:
REMOVED, when the card has been removed from the slot or the slot is empty;
INSERTED, when the card is placed in the slot; and
OVERLOAD, when the card is placed in the slot, but an error has occurred and handling the card is not allowed. The OVERLOAD status may also appear when the card is damaged.

The statuses of cards for specific clients stored in the clients table can have the following values:
REMOVED, when the card has been removed from the slot or the slot is empty, which means that the card cannot be handled by that slot interface;
NO_ACCESS, when a card is placed in the slot, but another client uses the card, which means that the card cannot be used by the initial client;
INSERTED, when the card is placed in the slot and another client is accessing it;
OVERLOAD, when the card is placed in the slot, but an error has occurred and handling the card is not allowed.

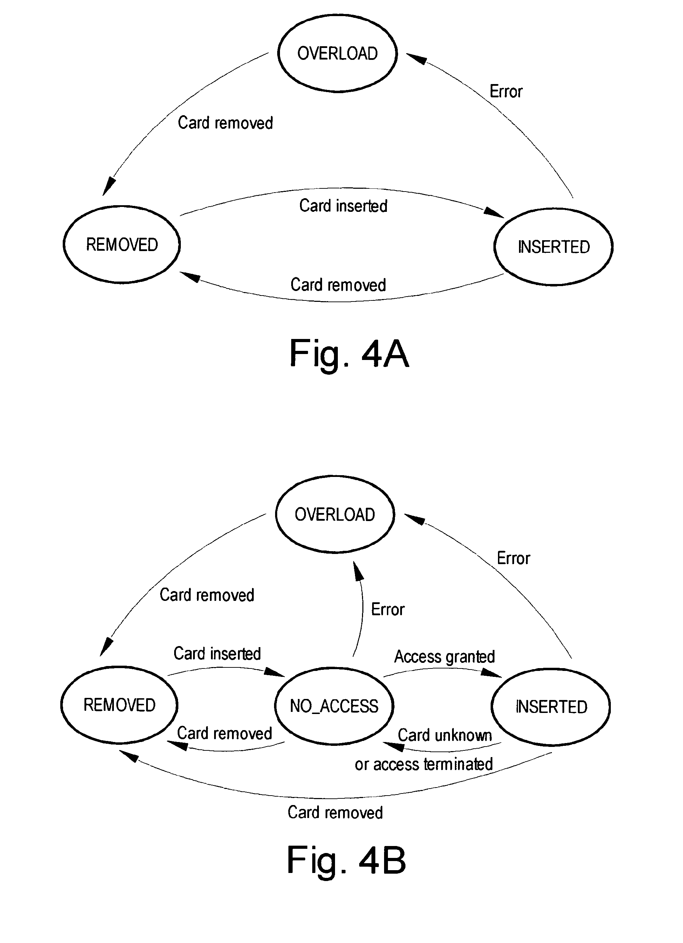

Fig. 4A and 4B present the conditions for transition between statuses. The transitions are controlled by the status controller and the card initialization controller. The status controller receives information on events in the slot via the slot callback function, registered in the slot table. The controller informs the clients about the change of status of the card for a particular client via client callback functions, which are registered in the clients table.

Fig. 4A presents individual statuses of cards. When the slot is empty, the status of the card in that slot is specified as REMOVED. When a card is inserted, the status is changed to INSERTED, and when a card is removed, the status returns to REMOVED. When a card handling error appears, the slot changes its status to OVERLOAD, from which it can return to the REMOVED status after the card is removed from the slot.

Fig. 4B presents individual statuses of the cards for specific clients. When the slot is empty, the status of the card for each client registered for that slot is specified as REMOVED. After the card is inserted, its status for all clients is set to NO_ACCESS, apart from the client, to which the access to the card is granted, which is set as INSERTED. If that client does not recognize the card or returns the access to another client, its status returns to NO_ACCESS, and the access to the card and the status INSERTED is passed to another client, specified by priorities. The transition between NO_ACCESS and INSERTED statuses is controlled by the card initialization controller. In case a card error occurs, the status of each client for that slot is set to OVERLOAD. The return to the REMOVED status from other statuses is possible after the card has been removed from the slot.

| Slot interface | Handling function | Status of the card in the slot |
|---|---|---|
| 1 | Slot1_f1 | INSERTED |
| 2 | Slot2_f1 | INSERTED |
| 3 | Slot3_f1 | REMOVED |

The current statuses of the slot interfaces are stored in the slot table 316 which may have above shown format.

The slot callback function is a function, which sends information to the status controller on the change of status of a card in a particular slot.

The configuration of clients for individual slots is stored in the clients table 315, which may have the following format:

| Client | Slot | Priority | Handling function | Card status for a particular client | Configuration |
|---|---|---|---|---|---|
| 1 | 1 | 1 | Client1_f1 | INSERTED | Configuration_X |
| 1 | 2 | 1 | Client1_f2 | NO_ACCESS | Configuration_Y |
| 1 | 3 | 1 | Client1_f3 | REMOVED | Standard |
| 2 | 1 | 3 | Client2_f1 | NO_ACCESS | Standard |
| 3 | 1 | 2 | Client3_f1 | NO_ACCESS | Standard |
| 3 | 1 | 2 | Client3_f2 | INSERTED | Standard |
| 4 | 2 | 2 | Client4_f1 | NO_ACCESS | Configuration_Z |
| 4 | 3 | 3 | Client4_f2 | REMOVED | Standard |

The client callback function is a function, via which the status controller sends to particular client information on the change of status of the card in a particular slot.

When a function for registering the clients is called, the client may specify a certain configuration for the slot, for example configuration related to hardware parameters: the clock frequency, supply voltage or transmission protocol. When the client does not specify certain configuration, the slot interface will handle the card in a standard way, using a default configuration.

When a function for registering the clients is called, the client may also specify a certain priority, which is used by the procedure for card initialization to determine the order of granting access. This allows quicker determination of a client for handling a specific card (the most frequent clients can be searched first) or the priority of one client compared to others (because of a paid subscription fee, user status, etc.).

Fig. 5 presents the procedure for slots registration, initialized at the decoder start-up. In the first step 501 the procedure sends a request to a low-level slot interfaces driver for the number of available slots. Next, in step 502, the procedure proceeds to the fist slot interface, for which, in step 503, it registers in the slot table a callback function. In step 504 the procedure checks if there are other, hitherto unregistered slots. If there are slots to be registered, the procedure registers callback functions of those slots in step 505 of the procedure. After all slots are registered, the procedure is finished at step 506, and the slot table then contains data on callback functions of all registered slots.

In another embodiment, the slots configuration may be permanently stored in the slot table, and then it is not necessary to run the registering procedure at the start-up of the decoder.

Fig. 6 presents a procedure for registration executed by all clients, which should be registered in the clients table of the slot manager. The procedure is called up by every client at the start-up of the decoder, or at the time of registration of a new client. In the first step 601 the client sends to the slot manager a request for a number of available slots, by calling the function informing about the slots. Next, in step 602 it determines the first slot for which the client wishes to register, and in step 603 it sets the registration parameters, for example: the priority, the callback function (which can be different for each slot) and the configuration for that slot. In the next step, 605, the slot manager registers the client for the selected slot by calling the registering function and passing the registration parameters. Next, in step 606, the client decides if it would like to register for other slots. If it wants to register for another slot, the client selects the next slot for registration in step 604. After the client is registered for all requested slots, the procedure ends in step 607, and the client parameters for requested slots are stored in the clients table.

Fig. 7 presents the procedure for card initialization, performed by the card initialization controller when a card is inserted into the slot, or when a client terminates the access to the card in step 709. After the card is inserted into the slot, in step 701, the statuses of all clients registered for the slot are set to NO_ACCESS in step 702. Next, the client with the highest priority is chosen in step 703. If the client requests in step 704 a certain configuration of the slot, the slot configuration is adjusted by passing specific parameters to the slot interface. Next, in step 705 the client is granted access to the card resources, and its status is changed to INSERTED. Next, in step 706 it is checked, if the client accepted the card and if it can handle it. If not, its status is set to NO_ACCESS in step 707 and it is checked in step 710, if all clients have been analyzed. If so, the procedure ends with a message in step 712, that the card is not handled by any of the available clients. If not, the client with the next priority is selected in step 711. If the client accepts the card, it handles the card in step 708. If, during handling the card, an event occurs which terminates the access of the client to the card (for example, termination of the client operation, termination of the subscription, error, etc.), then in step 709 an attempt is made to pass the card control to other clients.

Fig. 8 presents the procedure for access control, which controls the access of clients to cards resources. After a function for access to resources of a card in a particular slot is called in step 801, the controller reads from the clients table the status of the card for a particular client in step 802. Next, depending on the status, which is determined in step 803, it grants or denies access to card resources. If the card status for a particular client is "INSERTED", the controller grants access to card resources in step 804. If the card status is "REMOVED", the controller sends a message about no card in a particular slot in step 805. If the card status is "NO_ACCESS", the controller sends a message about no access to resources of a particular card in step 806. If the card status is "OVERLOAD", then in step 807 the controller sends a message about an error in card operation.

The access controller is an optional block, which prevents conflicts when an unauthorized client requests access to card resources. Its presence is not necessary when each client receives information on card status via a client callback function and does not attempt to access the card if its card status is other than INSERTED".

In the presented embodiment, the access to slot interfaces is enabled for several embedded systems requesting access to smart card resources via clients, as well as for the concurrent use of several slots. The slots of this embodiment are universal and are designed for handling various cards. Their parameters, such as the transmission bit-rate, frame width, or transmission protocol, can be adapted to a specific card type. The access of clients to cards is controlled on the basis of the current status of the card for a specific client, the status being updated after a card is inserted into the slot or if access to the card is terminated by one of the clients.

The preferred embodiment having been thus described, it will now be evident to those skilled in the art that further variation thereto may be undertaken. Such variations are not regarded as a departure from the invention, the true scope of the invention being set forth in the claims appended hereto.

## Claims

1. A system for controlling smart card slots of a device (101) with smart card slots (121, 122, 123) providing access to smart card (111, 112, 113) resources via slot interfaces (103) and with embedded systems (143, 145, 147, 151) requesting access to the smart card (111, 112, 113) resources via system-specific interfaces (221, 222, 223, 224), where each embedded system (143, 145, 147, 151) is provided with a client (142, 144, 146, 152) supporting communication via a client interface (153), and the system comprises a slot manager (104) managing access to slot interfaces (103) for the embedded systems (143, 145, 147, 151) via the clients (142, 144, 146, 152) using the client interface (153), **characterized in that** the slot manager comprises a status controller (313) configured to control the status of cards (111, 112, 113) in each slot of the smart card slots (121, 122, 123) in relation to a plurality of clients (142, 144, 146, 152), whereas at least one of the clients (142, 144, 146, 152) is registered for a plurality of slots and at least one slot of the slots (121, 122, 123) is used by a plurality of the clients, whereby the slot manager (104) is configured to control access of the embedded systems (143, 145, 147, 151) to resources of a smart card (111, 112, 113) in a specific slot (121, 122, 123) depends on the basis of a current status of the smart card (111, 112, 113) in a particular slot (121, 122, 123) for the client (142, 144, 146, 152) of a particular embedded system.

2. The system according to claim 1 **characterized in that** the client (142, 144, 146, 152) is capable to convert events of the system-specific interface (221, 222, 223, 224) to events of the client interface (153), and to convert events of the client interface (153) to events of the system-specific interface (221, 222, 223, 224).

3. The system according to claim 1 **characterized in that** the slot manager (311) handles communication with smart card slots (121, 122, 123), and via the slot registration block (321) and the client registration block (331) it collects information on available slots via and stores it in the slot table (316), and collects information on the clients (301, 302, 303, 304) of the embedded systems (143, 145, 147, 151) requesting access to smart card resources and stores that information in the clients table (315), and determines the access of clients (301, 302, 303, 304) to slot interfaces via the access controller (312).

4. The system according to claim 1, **characterized in that** the status of the card in the slot for a specific client is stored by the slot manager (311) in the clients table (315), which contains information on clients registered for specific slots, a priority of a specific client for a specific slot which specifies the priority of access to the slot by the client with respect to other clients registered for the slot and hardware configurations required by specific clients for specific slots.

5. The system according to claim 1, **characterized in that** the status controller (313) comprises a card initialization controller (314) handling transition between "inserted" and "no_access" statuses of a card, and that the status of the card for a client is at least "inserted", when an access is granted after client's request for the access to card resources, and "no_access", when the access is denied after client's request for access to card resources, and that for consecutive clients the status of the card is set to "inserted" and to "no_access" for other clients, and if the client does not accept the card, the procedure proceeds to the next client, and if the client accepts the card, the procedure is terminated.

6. The system according to claim 1, **characterized in that** the device is a digital television decoder (101) and the embedded systems requesting access to smart card resources are conditional access systems (143, 145, 147) and/or high-level smart card drivers (151).

7. A method for controlling smart card slots of a device with smart card slots providing access to smart card resources via slot interfaces and with embedded systems requesting access to smart card resources via system-specific interfaces, **characterized in that** a client supporting communication via a client interface is provided for each embedded system, a slot manager is provided, which manages access to slot interfaces for the embedded systems via the clients using the client interface, a status controller is provided for the slot manager, which controls the status of cards in each smart card slot in relation to a plurality of clients, whereas at least one of the clients (142, 144, 146, 152) is registered for a plurality of slots and at least one slot of the slots (121, 122, 123) is used by a plurality of the clients, whereby the access of the embedded systems resources of a smart card in a specific smart card slot is controlled by the slot manager on the basis of a current status of the smart card in a particular slot for the client of a particular embedded system.

8. The method according to claim 7, **characterized in that** the communication with smart card slots is handled via the slot manager, such that information on available slots is collected via the slot registration block and stored in the slot table, and information on the clients of the embedded systems requesting access to smart card resources is collected via the client registration block and stored in the clients table, and the access of clients to slot interfaces is determined via the access controller.

9. The method according to claim 7, **characterized in that** the status of the card for a client is at least "inserted", when an access is granted after client's request for the access to card resources, and "no_access", when the access is denied after client's request for access to card resources, and the transition of card statuses between "inserted" and "no_access" status is handled via the card initialization controller, being a component of the status controller, such that for consecutive clients the status of the card is set to "inserted" and to "no_access" for other clients, and if the client does not accept the card, the procedure proceeds to the next client, and if the client accepts the card, the procedure is terminated.

10. The method according to claim 9, **characterized in that** the procedure for the transition of card status is activated after the card is inserted into the slot or after a client accessing the card has terminated the access to the card.

11. The method according to claim 9, **characterized in that** the status of a card for a client is additionally "overload", where after client's request for access to card resources information about a card error is sent, and the status of "removed", where after client's request for access to card resources information about no available card is sent, where the status "overload" is assigned to all clients registered for a particular card when an error in handling that card occurs, and the status "removed" is assigned to all clients registered for a particular card after the card is removed from the slot.

## Patentansprüche

1. Ein System zur Bedienung von Chipkartenlesegeräten einer Vorrichtung (101) mit Chipkartenlesegeräten (121,122,123), die den Zugang zu den Data der Chipkarten (111,112,113) über dem Schlitzinterface (103) versorgen, und mit eingebetteten Systemen (143, 145, 147, 151), welche den Zugang zu den Data der Chipkarten (111,112, 113) mittels systemspezifischer Interfaces (221, 222, 223, 224) veranlassen, wobei jedes eingebettete System (143, 145, 147, 151) mit einem Kunden (142, 144, 146, 152) für die Unterstützung der Kommunikation über ein Kundeninterface (153) versehen ist, und wobei das System um den Zugang zu den Schlitzinterfaces (103) für die eingebetteten Systeme (143, 145, 147, 151) über die Kunden (142, 144, 146, 152) handzuhaben, einen Schlitzverwalter (104) hat, wobei bei dem Zugang das Kundeninterface (153) benutzt wird, **dadurch gekennzeichnet, dass** der Schlitzverwalter einen Statusprüfer (313) umfasst, der so gestaltet ist um den Status von allen Chipkarten (111, 112, 113) in jedem der Chipkartenlesegeräten (121, 122, 123) in Abhängigkeit von einer Mehrheit der Kunden (142, 144, 146, 152) zu kontrollieren, und wobei mindestens einer der Kunden (142, 144, 146, 152) für eine Mehrheit von Chipkartenlesegeräten (121, 122, 123) eingetragen ist und mindestens eines der Chipkartenlesegeräte (121, 122, 123) von einer Mehrzahl der Kunden genutzt wird, wodurch der Schlitzverwalter (104) so gestaltet ist, den Zugang der eingebetteten Systeme (143, 145, 147, 151) zu den Data der Chipkarten (111, 112, 113) in einem systemspezifischen Chipkartenlesegerät (121, 122, 123) auf der Grundlage des gegenwärtigen Status der Chipkarte (111, 112, 113) in einem besonders eingelagerten Chipkartenlesegerät (121, 122, 123) für die Kunden (142, 144, 146, 152) des besonders eingebetteten Systems zu kontrollieren.

2. Das System nach Anspruch 1, **dadurch gekennzeichnet, dass** der Kunde (142, 144, 146, 152) im Stande ist, die Ergebnisse der systemspezifischen Interface (221, 222, 223, 224) zu dem Kundeninterface (153) umzuformen und Ergebnisse des Kundeninterface (153) zu Ergebnissen der systemspezifischen Interface (221, 222, 223, 224) umzuwandeln.

3. Das System nach Anspruch 1, **dadurch gekennzeichnet, dass** der Schlitzverwalter (311) eine Verständigung mit den Chipkartenlesegeräten (121, 122, 123) durchführt und mittels des Schlitzregistrierungsblockes (321) und des Kundenregistrierungsblockes (331) Informationen über das verfügbare Chipkartenlesegerät sammelt und in einer Schlitztabelle (316) speichert, und Informationen über Kunden (301, 302, 303, 304) des eingebetteten Systems (143, 145, 147, 151) sammelt, die den Zugang zu den Data der Chipkarten erbeten, und diese Informationen in der Kundentabelle (315) speichert, und über den Zugang von Kunden (301, 302, 303, 304) zu den Schlitzinterface mittels des Zugangsprüfers (312) entscheidet.

4. Das System nach Anspruch 1, **dadurch gekennzeichnet, dass** der Status der Karte in dem Chipkartenlesegerät für einen bestimmten Kunden beim Schlitzverwalter (311) in der Kundentabelle (315) gespeichert ist, welcher Informationen über Kunden enthält, die für bestimmte Schlitze eingetragen sind, als auch Informationen über einen Vorrang eines bestimmten Kunden für ein bestimmtes Chipkartenlesegerät, welcher den Vorrang des Zuganges zum Chipkartenlesegerät durch den Kunden mit Rücksicht auf andere Kunden, die für das Chipkartenlesegerät eingetragen sind, und Informationen über die "Hardware"-Gestaltung, die für bestimmte Kunden für bestimmte Chipkartenlesegeräte erforderlich sind.

5. Das System nach Anspruch 1, **dadurch gekennzeichnet, dass** der Statusprüfer (313) einen Kundensetzungsprüfer beinhaltet (314), der den Übergang zwischen "einführen"- und "kein Zugang"-Status der Karte erledigt und dass der Status der Karte für den Kunden mindestens "einführen" wird, wenn ein Zugang nach Kundenanforderung zum Zugang zu den Data der Karte gewährt ist und "kein Zugang", wenn der Zugang nach Kundenanforderung zum Zugang zu den Data der Karten verweigert ist und für aufeinanderfolgende Kundenanforderungen der Status der Karte auf "einführen" und "kein Zugang" für andere Kunden geht und wenn der Kunde die Karte nicht akzeptiert, geht der Vorgang zum nächsten Kunden weiter und wenn der Kunde die Karte akzeptiert endet der Vorgang.

6. Das System nach Anspruch 1, **dadurch gekennzeichnet, dass** die Vorrichtung ein digitaler Fernsehdecoder (101) ist und dass eingebettete Systeme, welche den Zugang zu den Data der Chipkarten erfordern, abhängige Zugangssysteme (143, 145, 147) und/oder Hoch-Niveau-Chipkartentreiber (151) sind.

7. Verfahren zur Bedienung von Chipkartenlesegeräten einer Vorrichtung mit Chipkartenlesegeräten, die den Zugang zu den Data der Chipkarten über dem Schlitzinterface versorgen, und mit eingebetteten Systemen, welche den Zugang zu den Data der Chipkarten mittels systemspezifischer Interface veranlassen, **dadurch gekennzeichnet, dass** eine kundenunterstützende Verständigung der Kommunikation über ein Kundeninterface für jedes eingebettete System bereitgestellt wird, ist ein Schlitzverwalter bereitgestellt, welcher den Zugang zu den Schlitzinterfacen der eingebetteten Systeme über den Kunden durch Benutzen des Kundeninterface verwaltet und ist mit einem Statusprüfer für den Schlitzverwalter versehen, welcher den Status der Karten in jedem Chipkartenlesegerät in Bezug auf die Mehrheit der Kunden (142, 144, 146, 152) kontrolliert, und wobei mindestens einer der Kunden (142, 144, 146, 152) für eine Mehrheit von Chipkartenlesegeräten eingetragen ist und mindestens eines der Chipkartenlesegeräte von einer Mehrzahl der Kunden genutzt wird, wodurch der Schlitzverwalter so gestaltet ist, den Zugang der eingebetteten Systeme zu den Data der Chipkarten in einem systemspezifischen Chipkartenlesegerät auf der Grundlage des gegenwärtigen Status der Chipkarte in einem besonders eingelagerten Chipkartenlesegerät für den Kunden des besonders eingebetteten Systems zu kontrollieren.

8. Das Verfahren nach Anspruch 7, **dadurch gekennzeichnet, dass** die Kommunikation mit den Chipkartenlesegeräten mittels des Schlitzverwalters so gehandhabt wird, dass Informationen über verfügbare Chipkartenlesegeräte mittels des Schlitzregistrierungsblockes gesammelt und in der Schlitztabelle gespeichert werden und Informationen über die Kunden des eingebetteten Systems Zugang zu den Data der Chipkarten veranlasst werden und mittels des Kundenregistrierungsblockes gesammelt und in die Kundentabelle gespeichert werden, wobei der Zugang von Kunden zu den Schlitzinterfacen mittels des Zugangsprüferers geregelt ist.

9. Das Verfahren nach Anspruch 7, **dadurch gekennzeichnet, dass** der Status einer Kundenkarte mindestens "einführen" ist, wenn der Zugang nach einer Kundenanforderung zu den Data der Karte gewährt ist und "kein Zugang", wenn der Zugang nach einer Kundenanforderung zu den Data der Karte verwehrt wird und die Überleitung des Kartenstatus zwischen "einführen" und "kein Zugang" mittels des Kundensetzungsprüfers durchgeführt wird, als ein Bestandteil des Statusprüfers solcherart, dass für aufeinander folgende Kunden der Status der Karte zu "einführen" und zu "kein Zugang" für andere Kunden gegeben wird und wenn der Kunde die Karte nicht akzeptiert, der Vorgang den nächsten Kunden bedient und wenn der Kunde die Karte akzeptiert, der Vorgang beendet ist.

10. Das Verfahren nach Anspruch 9, **dadurch gekennzeichnet, dass** der Vorgang für die Überleitung des Kartenstatus aktiviert ist, nachdem die Karte in das Chipkartenlesegerät eingeführt ist oder nachdem der Kartenzugang eines Kunden durch Aufheben des Zuganges zu der Karte beendet ist.

11. Das Verfahren nach Anspruch 9, **dadurch gekennzeichnet, dass** der Status einer Karte zusätzlich "überladen" ist, wenn nach einer Kundenanforderung zu den Informationen über die Data der Karte ein Fehler gesendet wird und der Status nach einer Kundenanforderung zum Zugang zu Informationen der Data der Karte über eine nicht verfügbare Karte "zurückgezogen" gesendet wird, wenn der Status "überladen" zu allen Kunden übertragen wird, die für eine besondere Karte eingetragen sind, wenn sich ein Fehler beim Benutzen der Karte ereignet und der Status "zurückgezogen" zu allen Kunden, die für besondere Karten eingetragen sind, übertragen wird, nachdem die Karte aus dem Chipkartenlesegerät herausgezogen ist.

## Revendications

1. Système de service des lecteurs des cartes électroniques d'un dispositif (101) avec les fentes des lecteurs des cartes (121, 122, 123) assurant l'accès aux ressources de la carte électronique (111, 112, 113) via les interfaces (103) de fente de lecteur de carte et avec des systèmes embarqués (143, 145, 147, 151) requisants l'accès aux ressources de la carte électronique (111, 112, 113) via les interfaces système-spécifiques (221, 222, 223, 224), où chacun système embarqué (143, 145, 147, 151) est fourni du client (142, 144, 146, 152) faisant la communication via l'interface client (153), et le système renferme le gérant de fente (104) gestant l'accès à les interfaces fentes (103) pour les systèmes embarqués (143, 145, 147, 151) via les clients (142, 144, 146, 152) utilisant l'interface client (153), **caractérisé en ce que** le gérant de fente contiens le contrôleur du statut (313) configuré pour contrôler le statut des cartes (111, 112, 113) en chacune fente des lecteurs des cartes (121, 122, 123) en rapport à la pluralité des clients (142, 144, 146, 152), où au moins un des clients (142, 144, 146, 152) est enregistré à la pluralité des fentes et au moins une des fentes (121, 122, 123) est utilisée par la pluralité des clients, pendant que le gérant de fente (104) est configuré pour contrôler l'accès des systèmes embarqués (143, 145, 147, 151) aux ressources de la carte électronique (111, 112, 113) en fente spécifique (121, 122, 123) en tenant compte du statut courant de la carte électronique (111, 112, 113) dans une fente particulière (121, 122, 123) pour le client (142, 144, 146, 152) du système embarqué particulier.

2. Système selon la revendication 1, **caractérisé en ce que** le client (142, 144, 146, 152) est capable de convertir des événements de l'interface système-spécifique (221, 222, 223, 224) aux événements de l'interface client (153) et de convertir les événements de l'interface client (153) aux événements de l'interface système-spécifique (221, 222, 223, 224).

3. Système selon la revendication 1, **caractérisé en ce que** le gérant de fente (311) geste la communication avec les fentes des lecteurs des cartes électroniques (121, 122, 123) et via le bloc d'enregistration des fentes (321) et le bloc d'enregistration des clients (331) recueillit l'information sur des fentes accessibles et stocke cette information dans la table des fentes (316), et recueillit l'information sur des clients (301, 302, 303, 304) des systèmes embarqués (143, 145, 147, 151) requisants l'accès aux ressources de la carte électronique et stocke cette information dans la table des clients (315), et détermine l'accès des clients (301, 302, 303, 304) aux interfaces fentes via le contrôleur d'accès (312).

4. Système selon la revendication 1, **caractérisé en ce que** le statut de la carte insérée dans la fente de lecteur de carte pour un client spécifique est stocké par le gérant de fente (311) dans la table des clients (315), laquelle contiens l'information sur les clients registrés pour les fentes spécifiques, la priorité du client spécifique à la fente spécifique, laquelle spécifie la priorité d'accès à la fente par le client en tennant la compte d'autres clients registrés pour la fente et les configurations du matériel demandées par les clients spécifiques pour les fentes spécifiques.

5. Système selon la revendication 1, **caractérisé en ce que** le contrôleur du statut (313) renferme le contrôleur d'initialisation de la carte (314) lequel geste la transition parmi les statuts "insérée" et "non_accès" de la carte, et que le statut de la carte pour le client est au moins "insérée" si l'accès est accordé après que le client a demandé l'accès aux ressources de la carte électronique, et "non_accès" si l'accès est refusé après que le client a demandé l'accès aux ressources de la carte électronique, et que pour les clients consécutifs le statut de la carte est ajusté "insérée" et "non_accès" pour les autres clients, et si le client n'accepte pas la carte, la procédure est appliquée au client suivant, et si le client accepte la carte, la procédure est terminée.

6. Système selon la revendication 1, **caractérisé en ce que** ledit dispositif c'est un décodeur télévision digitale (101) et les systèmes embarqués requisants l'accès aux ressources de la carte électronique ce sont des systèmes d'accès conditionel (143, 145, 147) et/ou haut-niveau pilotes (151) des cartes électroniques.

7. Procédé de service des lecteurs des cartes électroniques d'un dispositif avec les fentes des lecteurs des cartes assurant l'accès aux ressources de la carte électronique via les interfaces de fente de lecteur de carte et avec des systèmes embarqués requisants l'accès aux ressources de la carte électronique via les interfaces système-spécifiques, **caractérisé en ce que** le client faisant la communication via l'interface client est fourni au chacun système embarqué, le gérant de fente gestant l'accès à les interfaces fentes pour les systèmes embarqués via les clients utilisant l'interface client est fourni, le contrôleur du statut est fourni pour le gérant de fente lequel contrôle le statut des cartes en chacune fente des lecteurs des cartes en rapport à la pluralité des clients, où au moins un des clients est enregistré à la pluralité des fentes et au moins une des fentes est utilisée par la pluralité des clients, pendant que l'accès des systèmes embarqués aux ressources de la carte électronique en fente spécifique est contrôlé par le gérant de fente en tenant compte du statut courant de la carte électronique dans une fente particulière pour le client du système embarqué particulier.

8. Procédé selon la revendication 7, **caractérisé en ce que** la communication avec les fentes des lecteurs des cartes électroniques est gestée via le gérant de fente, que l'information sur des fentes accessibles est recueilli via le bloc d'enregistration des fentes et est stockée dans la table des fentes, et que l'information sur des clients des systèmes embarqués requisants l'accès aux ressources de la carte électronique est recueilli via le bloc d'enregistration des clients et est stockée dans la table des clients, et que l'accès des clients aux interfaces fentes est déterminé via le contrôleur d'accès.

9. Procédé selon la revendication 7, **caractérisé en ce que** le statut de la carte pour le client est au moins "insérée" si l'accès est accordé après que le client a demandé l'accès aux ressources de la carte électronique, et "non_accès" si l'accès est refusé après que le client a demandé l'accès aux ressources de la carte électronique, et que la transition des statuts de la carte entre le statut "insérée" et le statut "non_accès" est gestée via le contrôleur d'initialisation de la carte lequel est un élément du contrôleur du statut, que pour les clients consécutifs le statut de la carte est ajusté "insérée" et "non_accès" pour les autres clients, et si le client n'accepte pas la carte, la procédure est appliquée au client suivant, et si le client accepte la carte, la procédure est terminée.

10. Procédé selon la revendication 9, **caractérisé en ce que** la procédure de transition du statut de la carte est activée après que la carte est insérée dans la fente ou après que le client faisant l'accès à la carte a terminé ledit accès à la carte.

11. Procédé selon la revendication 9, **caractérisé en ce que** le statut de la carte pour le client est en supplément "comble" si l'information d'erreur de la carte est envoyée après que le client a demandé l'accès aux ressources de la carte électronique, et le statut est "tirée" si l'information d'aucune carte accessible est envoyée après que le client a demandé l'accès aux ressources de la carte électronique, où le statut "comble" est attribué aux tous clients enregistrés pour une carte particulière si un erreur en gestion de cette carte se présente, et le statut "tirée" est attribué aux tous clients enregistrés pour une carte particulière après que la carte est tirée de la fente.
